# FASCICULE DE BREVET EUROPEEN

(11) **EP 1 092 594 B1**
(45) Date de publication et mention de la délivrance du brevet: **09.06.2004**
(21) Numéro de dépôt: 00402756.1
(22) Date de dépôt: 06.10.2000
(51) Int. Cl.: B60R 13/07, B60R 13/04

(54) **Enjoliveur de finition formant une gouttière d'évacuation de l'eau s'écoulant en bordure du toit d'un véhicule automobile**
Zierleiste zum Schaffen einer Rinne zum Abführen von Wasser am Dachrand eines Kraftfahrzeuges
Finishing moulding forming a gutter for the evacuation of water flowing at the motor vehicle roof edge

(30) Priorité: 15.10.1999 FR 9912878
(43) Date de publication de la demande: 18.04.2001
(73) Titulaire: Renault s.a.s., 92100 Boulogne Billancourt (FR)
(72) Inventeur: Fontaine, Thierry, 78180 Montigny le Bretonneux (FR); Pagno, Claude, 78470 Saint Remy les Chevreuses (FR)

(56) Documents cités:
- EP-A- 0 861 750
- DE-A- 4 023 823
- DE-B- 1 203 619
- US-A- 4 728 145
- PATENT ABSTRACTS OF JAPAN vol. 7, no. 120 (M-217), 25 mai 1983 (1983-05-25) & JP 58 039519 A (NISSAN JIDOSHA KK), 8 mars 1983 (1983-03-08)

## Description

La présente invention concerne un enjoliveur de finition formant une gouttière d'évacuation de l'eau s'écoulant en bordure du toit d'un véhicule automobile et plus particulièrement un enjoliveur fixé sur le panneau latéral du véhicule, le long du bord de la carrosserie en regard du cadre supérieur des portes latérales du véhicule, et servant de surface d'appui aux joints d'étanchéité des portes latérales.

Il est connu dans l'industrie automobile, d'utiliser des enjoliveurs de finition formant une gouttière d'évacuation de l'eau s'écoulant en bordure du toit et de les fixer sur la carrosserie au moyen de rivets. Un tel enjoliveur est par exemple décrit dans la demande de brevet EP-A1-0 390 238.

Toutefois, de tels enjoliveurs de finition fixés par rivets présentent l'inconvénient de nécessiter un temps de montage important pour la mise en place des rivets. Par ailleurs, les riveteuses étant des outils lourds et peu maniables les risques de dégradations de la carrosserie ou de l'enjoliveur sont importants lors de chocs ou de dérapages accidentels de la riveteuse. De plus, l'opération de rivetage libère des morceaux métalliques pouvant stagner dans un coin de la carrosserie et développer une corrosion locale accélérée.

Par ailleurs, avec de tels montages, la tête des rivets de fixation reste visible sur l'enjoliveur de finition ce qui dégrade l'esthétique de l'enjoliveur. Il est connu pour remédier à ce dernier inconvénient de disposer la tête des rivets dans une gorge et de recouvrir cette dernière d'une bande de finition en plastique masquant la gorge et les rivets de fixation. Toutefois, la mise en place d'une telle bande de finition augmente encore le temps de montage et le coût de l'enjoliveur.

On connaît aussi, par le document DE-A-4023823, un enjoliveur de pavillon clipsé sur la carrosserie du véhicule selon le préambule de la revendication 1.

Le but de la présente invention est donc de proposer un enjoliveur de finition qui se monte rapidement sur la carrosserie d'un véhicule, sans nécessiter d'outillage spécifique et sans risque de détérioration de la carrosserie, et qui possède une excellente finition tout en étant simple et économique à réaliser.

A cet effet, l'invention concerne un enjoliveur de finition formant une gouttière d'évacuation de l'eau s'écoulant en bordure du toit d'un véhicule automobile, fixé sur le panneau latéral du véhicule le long du bord de la carrosserie en regard du cadre supérieur des portes latérales du véhicule, et servant de surface d'appui aux joints d'étanchéité des portes latérales, caractérisé en ce que la surface d'appui est constituée par une face extérieure plane, située entre le bord et le cadre supérieur de porte, et en ce que l'enjoliveur immobilisé sur ledit bord par clipage au moyen d'agrafes de fixation maintenues par la face intérieure de l'enjoliveur.

Selon une caractéristique de la présente invention, les agrafes comportent une tête faisant saillie ayant la forme d'un tronc de cône fendu parallèlement à son axe venant s'enclencher élastiquement dans un trou prévu sur le bord de la carrosserie.

Selon une autre caractéristique de la présente invention, les agrafes comportent une base présentant des ailettes s'insérant latéralement entre deux rails de maintien formés sur la face intérieure de l'enjoliveur.

Selon une autre caractéristique de la présente invention, les rails de maintien s'étendent sur toute la longueur de l'enjoliveur et sont constitués d'un premier rail formé par la courbure à 180° du bord de l'enjoliveur orienté vers l'intérieur du véhicule et d'un second rail formé par une paroi faisant saillie sur la face intérieure de l'enjoliveur et dont l'extrémité est coudée à 90°, en direction du premier rail.

Selon une autre caractéristique de la présente invention, le bord de l'enjoliveur s'étendant vers l'extérieur du véhicule comporte une extrémité recourbée parallèlement au panneau latéral du véhicule formant une gouttière canalisant l'eau provenant du toit.

Selon une autre caractéristique de la présente invention, l'enjoliveur est réalisé en aluminium extrudé.

Selon une autre caractéristique de la présente invention, la base de l'agrafe comporte un élément élastique coopérant avec une ouverture réalisée en bordure d'au moins un des rails pour immobiliser en translation l'agrafe sur le rail.

Selon une autre caractéristique de la présente invention, une mousse d'étanchéité est interposée entre la face intérieure de l'enjoliveur et le bord de la carrosserie.

D'autres caractéristiques et avantages de l'invention apparaîtront à la lecture de la description d'un exemple de réalisation de l'enjoliveur de finition selon l'invention en référence aux dessins annexés dans lesquels :
- la figure 1 est une vue partielle en perspective d'un panneau latéral de véhicule automobile équipé d'un enjoliveur de finition selon l'invention ;
- la figure 2 est une vue en coupe selon la ligne II-II de la figure 1 ;
- la figure 3 est une vue partielle en perspective d'une zone de l'enjoliveur équipée d'une agrafe élastique ;
- la figure 4 est une vue de dessus de la zone de l'enjoliveur représentée sur la figure 3.

Pour faciliter la lecture des dessins, les mêmes pièces portent les mêmes références d'une figure à l'autre. Par ailleurs, seuls les éléments nécessaires à la compréhension de l'invention ont été figurés.

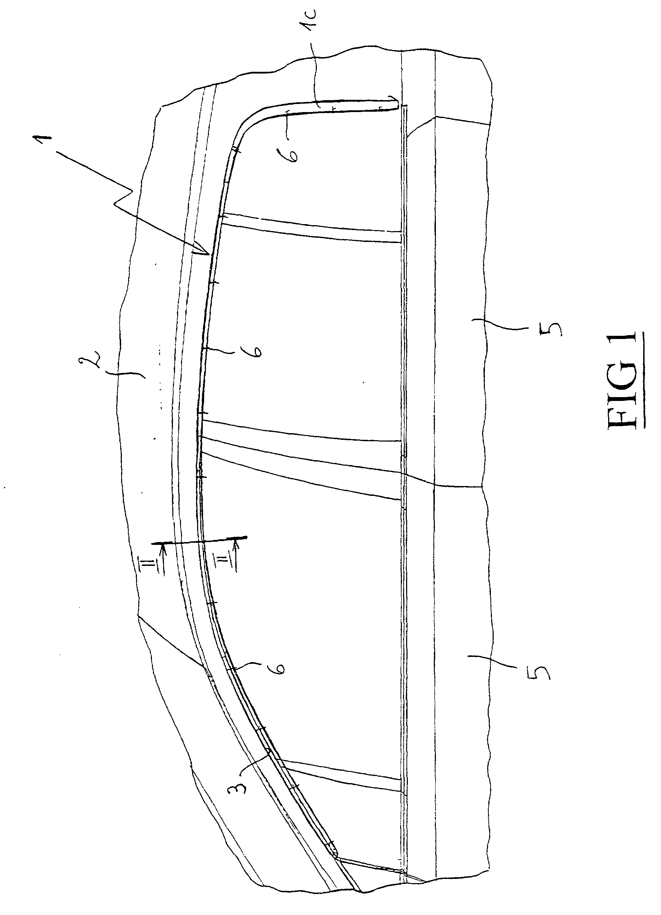

La figure 1 représente une vue schématique d'un véhicule automobile comportant un toit 2 relié à un panneau latéral de carrosserie équipé de deux portières 5. Le panneau latéral est muni d'un enjoliveur 1 de finition disposé sur le bord 3 de la carrosserie en regard du cadre supérieur des portes latérales 5 et s'étend depuis l'extrémité supérieure avant de la porte 5 avant jusqu'au bord arrière de la porte 5 arrière.

L'enjoliveur 1 de finition est maintenu contre la surface plane du bord 3 de carrosserie au moyen d'une quinzaine d'agrafes de fixation 6 réparties uniformément sur la longueur de l'enjoliveur 1.

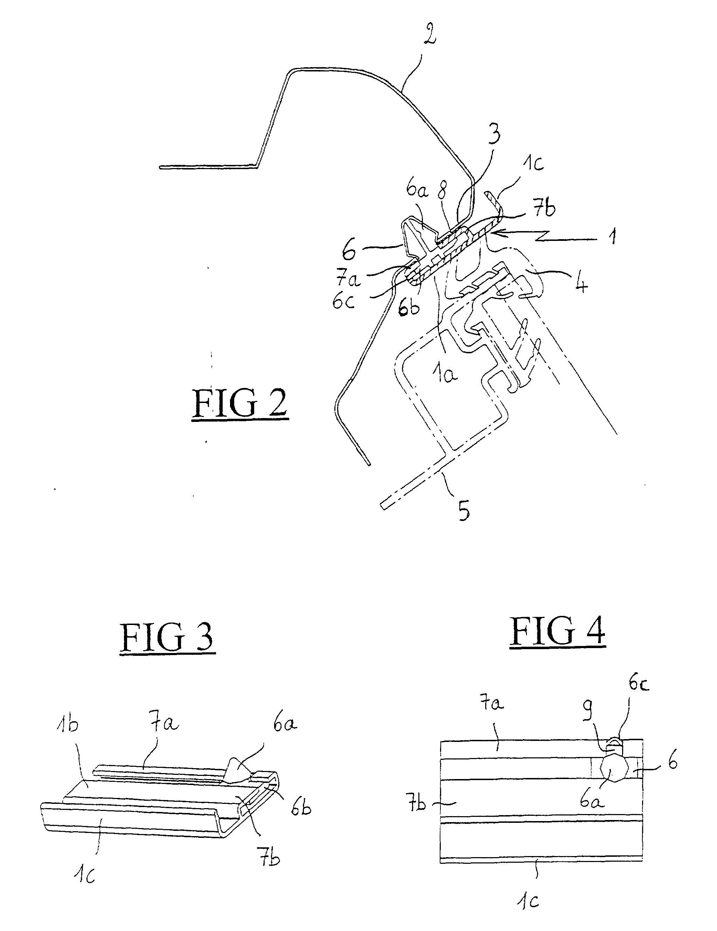

Comme on peut le voir sur la figure 2, l'enjoliveur 1 de finition possède une surface extérieure 1a plane qui sert de surface de réception aux joints d'étanchéité 4 portés par les portières 5 et est muni sur sa face intérieure de deux rails 7a et 7b permettant le maintien des agrafes de fixation 6.

Conformément aux figures 2 à 4, le premier rail 7a de maintien est formé par la courbure à 180° du bord de l'enjoliveur 1 orienté vers l'intérieur du véhicule et le second rail 7b de maintien est formé par une paroi faisant saillie perpendiculairement à la surface intérieure de l'enjoliveur 1 et possédant une extrémité coudée à 90° en direction du premier rail 7a. Le premier rail 7a comporte également à intervalle régulier des ouvertures 9 latérales coopérant avec les agrafes de fixation 6 pour immobiliser ces dernières en position.

L'agrafe de fixation 6 comporte un corps cylindrique s'insérant entre les deux rails 7a et 7b et reliant une tête 6a, en tronc de cône fendu parallèlement à son axe, à une base munie d'ailettes 6b rectangulaires s'entendant transversalement au corps de l'agrafe 6 et s'insérant latéralement sous les rails 7a et 7b. La base de l'agrafe 6 présente également deux bossages s'étendant sous les ailettes 6b, parallèlement à la direction des rails 7a et 7b, et possédant une épaisseur adaptée pour que l'épaisseur totale des ailettes 6a et des bossages correspondent sensiblement à la hauteur libre sous les rails 7a et 7b. Une telle agrafe 6 sera avantageusement réalisée par moulage en matière plastique.

L'agrafe de fixation 6 comporte également, à l'extrémité latérale de l'ailette 6b s'approchant du premier rail 7a, une languette élastique 6c réalisant un cliquet venant au contact du premier rail 7a et coopérant avec une des ouvertures 8 réalisées latéralement sur le premier rail 7a pour immobiliser l'agrafe de fixation 6 en regard d'un des trous prévus sur le bord 3 de la carrosserie.

Conformément à la figure 2, l'enjoliveur 1 se prolonge latéralement vers l'extérieur du véhicule, au delà du second rail 7b , et comporte un bord 1c recourbé venant sensiblement dans le prolongement du toit 2, légèrement à l'extérieur de celui-ci, pour former une gouttière.

Une mousse d'étanchéité 8 est interposée entre la surface d'appui des rails 7a,7b de l'enjoliveur 1 et le bord 3 de la carrosserie de façon à assurer l'étanchéité de la gouttière 1c et canaliser l'eau s'écoulant en bordure du toit 2.

L'enjoliveur 1 est avantageusement réalisé en aluminium extrudé et mis au galbe du bord de la carrosserie par cintrage.

L'opération de montage de l'enjoliveur sur le panneau latéral de carrosserie va maintenant être décrit.

Les agrafes 6 sont dans un premier temps montées sur l'enjoliveur 1 en insérant latéralement le corps de l'agrafe 6 entre les rails 7a et 7b et en faisant coulisser les agrafes 6 jusqu'à chacune des ouvertures 8 du premier rail 7a.

Un opérateur amène ensuite l'enjoliveur 1 équipé des agrafes 6 en regard du bord 3 de la carrosserie, en prenant soin de mettre en place la mousse d'étanchéité 8, et applique un pression sur l'enjoliveur 1 au niveau de chacune des agrafes 6 de manière à enclencher élastiquement la tête en tronc de cône 6a dans le trou du bord 3 de la carrosserie prévu à cet effet.

L'opération de montage est alors terminée.

Un tel enjoliveur présente l'avantage d'un montage rapide sur le véhicule sans nécessiter d'outillage spécifique pouvant être agressif en cas de chocs contre la carrosserie. Par ailleurs, des essais réalisés par la demanderesse ont permis de vérifier que la tenue procurée par de telles agrafes était suffisante pour résister aux contraintes pouvant habituellement être appliquées sur l'enjoliveur lorsque qu'une personne s'appuie contre la carrosserie.

Outre son avantage économique, la solution selon l'invention permet également d'obtenir une excellente finition grâce à la face extérieure parfaitement plane de l'enjoliveur, qui n'est pas altérée par les moyens de fixation, et qui procure une parfaite surface d'appui pour les joints d'étanchéité.

Bien entendu, l'invention n'est nullement limitée au mode de réalisation décrit et illustré qui n'a été donné qu'à titre d'exemple, l'extension de la protection étant définie par les revendications.

## Revendications

1. Enjoliveur (1) de finition formant une gouttière d'évacuation de l'eau s'écoulant en bordure du toit (2) d'un véhicule automobile, ledit enjoliveur (1) étant fixé sur le panneau latéral du véhicule, le long du bord (3) de la carrosserie en regard du cadre supérieur des portes latérales (5) du véhicule et servant de surface d'appui aux joints d'étanchéité (4) desdites portes latérales (5), **caractérisé en ce que** la surface d'appui est constituée par une face extérieure (1a) plane, située entre le bord (3) et le cadre supérieur de porte (5), et **en ce que** l'enjoliveur (1) est immobilisé sur ledit bord (3) par clipage au moyen d'agrafes de fixation (6) maintenues à la face intérieure (1b) de l'enjoliveur (1).

2. Enjoliveur (1) de finition formant gouttière d'évacuation selon la revendication précédente, **caractérisé en ce que** lesdites agrafes (6) comportent une tête (6a) faisant saillie ayant la forme d'un tronc de cône fendu parallèlement à son axe venant s'enclencher élastiquement dans un trou prévu sur ledit bord (3).

3. Enjoliveur (1) de finition formant gouttière d'évacuation selon la revendication précédente, **caractérisé en ce que** lesdites agrafes (6) comportent une base présentant des ailettes (6b) s'insérant latéralement entre deux rails (7a, 7b) de maintien formés sur la face intérieure (1b) de l'enjoliveur (1).

4. Enjoliveur (1) de finition formant gouttière d'évacuation selon la revendication précédente, **caractérisé en ce que** lesdits rails (7a, 7b) de maintien s'étendent sur toute la longueur de l'enjoliveur (1) et sont constitués d'un premier rail (7a) formé par la courbure à 180° du bord de l'enjoliveur (1) orienté vers l'intérieur du véhicule et d'un second rail (7b) formé par une paroi, faisant saillie sur la face intérieure (1b) de l'enjoliveur (1), dont l'extrémité est coudée à 90° en direction dudit premier rail (7a).

5. Enjoliveur (1) de finition formant gouttière d'évacuation selon la revendication précédente, **caractérisé en ce que** le bord de l'enjoliveur s'étendant vers l'extérieur du véhicule comporte une extrémité recourbée (1c) parallèlement au panneau latéral du véhicule formant une gouttière canalisant l'eau provenant du toit.

6. Enjoliveur (1) de finition formant gouttière d'évacuation selon la revendication précédente, **caractérisé en ce que** ledit enjoliveur (1) est réalisé en aluminium extrudé.

7. Enjoliveur de finition formant gouttière d'évacuation selon la revendication précédente, **caractérisé en ce que** la base de ladite agrafe (1) comporte un élément élastique (6c) coopérant avec une ouverture (9) réalisée en bordure d'au moins l'un des rails (7a, 7b) pour immobiliser en translation ladite agrafe (1) sur ledit rail (7a, 7b).

8. Enjoliveur (1) de finition formant gouttière d'évacuation selon la revendication précédente, **caractérisé en ce qu'**une mousse d'étanchéité (8) est interposée entre la face intérieure de l'enjoliveur (1) et le bord (3) de la carrosserie.

## Patentansprüche

1. Zierleiste (1), welche eine Rinne zum Abführen von Wasser am Dachrand (2) eines Kraftfahrzeugs bildet, wobei die Zierleiste (1) auf der Seitenwand des Fahrzeugs befestigt ist, entlang der Kante (3) der Karosserie gegenüber des oberen Rahmens der Seitentüren (5) des Fahrzeugs und als Auflagefläche für die Dichtungen (4) der Seitentüren (5) dient, **dadurch gekennzeichnet, dass** die Auflagefläche gebildet wird durch eine ebene äußere Seite (1a), die sich zwischen der Kante (3) und dem oberen Rahmen der Tür (5) befindet, und dadurch, dass die Zierleiste (1) unbeweglich befestigt ist auf der Kante (3) durch Anstecken mittels Befestigungshaken (6), welche auf der Innenseite (1b) der Zierleiste (1) gehalten werden.

2. Zierleiste (1), welche eine Rinne zum Abführen bildet gemäß dem vorhergehenden Anspruch, **dadurch gekennzeichnet, dass** die Haken (6) einen vorstehenden Kopf (6a) aufweisen, der die Form eines parallel zu seiner Achse geteilten Kegelstumpfs aufweist und elastisch in ein auf der Kante (3) vorgesehenes Loch einschnappt.

3. Zierleiste (1), welche eine Rinne zum Abführen bildet gemäß dem vorhergehenden Anspruch, **dadurch gekennzeichnet, dass** die Haken (6) eine Basis mit Flügeln (6b) aufweisen, welche sich seitlich zwischen zwei Halteschienen (7a, 7b) einfügen, die auf der Innenseite (1b) der Zierleiste (1) gebildet sind.

4. Zierleiste (1), welche eine Rinne zum Abführen bildet gemäß dem vorhergehenden Anspruch, **dadurch gekennzeichnet, dass** die Halteschienen (7a, 7b) sich über die gesamte Länge der Zierleiste (1) erstrecken und gebildet werden durch eine erste Schiene (7a), gebildet durch die zum Inneren des Fahrzeugs orientierte 180°-Krümmung der Kante der Zierleiste (1), und eine zweite Schiene (7b), gebildet durch eine auf der Innenseite (1b) der Zierleiste (1) vorstehende Wand, deren Ende um 90° in Richtung der ersten Schiene (7a) gekrümmt ist.

5. Zierleiste (1), welche eine Rinne zum Abführen bildet gemäß dem vorhergehenden Anspruch, **dadurch gekennzeichnet, dass** die Kante der Zierleiste, die sich zum Äußeren des Fahrzeugs erstreckt, ein parallel zur der Seitenwand des Fahrzeugs umgebogenes Ende (1c) aufweist, welches eine Rinne bildet, die das von dem Dach herrührende Wasser kanalisiert.

6. Zierleiste (1), welche eine Rinne zum Abführen bildet gemäß dem vorhergehenden Anspruch, **dadurch gekennzeichnet, dass** die Zierleiste (1) aus extrudiertem Aluminium realisiert ist.

7. Zierleiste (1), welche eine Rinne zum Abführen bildet gemäß dem vorhergehenden Anspruch, **dadurch gekennzeichnet, dass** die Basis des Hakens (1) ein elastisches Element (6c) aufweist, das mit einer Öffnung (9) zusammenwirkt, welches in der Kante mindestens einer der Schienen (7a, 7b) realisiert ist, um den Haken (1) auf der Schiene (7a, 7b) unbeweglich zu befestigen.

8. Zierleiste (1), welche eine Rinne zum Abführen bildet gemäß dem vorhergehenden Anspruch, **dadurch gekennzeichnet, dass** eine Dichtungsmasse (8) zwischen die Innenseite der Zierleiste (1) und der Kante (3) der Karosserie eingebracht ist.

## Claims

1. A finishing trim member (1) forming a gutter for the discharge of water flowing along the edge of the roof (2) of a motor vehicle, said trim member (1) being fixed on the side panel of the vehicle along the edge (3) of the body facing the upper frame of the side doors (5) of the vehicle and serving as a support surface for the seals (4) of the side doors (5), **characterised in that** the support surface is formed by a flat external face (1a) which is disposed between the edge (3) and the upper door frame (5) and that the trim member (1) is immobilised to said edge (3) by dipping by means of fixing clips (6) which are held to the internal face (1b) of the trim member (1).

2. A finishing trim member (1) forming a discharge gutter according to the preceding claim **characterised in that** said clips (6) comprise a head (6a) forming a projection in the shape of a truncated cone which is slit parallel to its axis and operative to engage elastically into a hole provided on said edge (3).

3. A finishing trim member (1) forming a discharge gutter according to the preceding claim **characterised in that** said clips (6) comprise a base having limb portions (6b) which are inserted laterally between two holding rails (7a, 7b) formed on the internal face (1b) of the trim member (1).

4. A finishing trim member (1) forming a discharge gutter according to the preceding claim **characterised in that** said holding rails (7a, 7b) extend over the entire length of the trim member (1) and are constituted by a first rail (7a) formed by a 180° curve of the edge of the trim member (1) which is oriented towards the interior of the vehicle and a second rail (7b) formed by a wall in projecting relationship on the interral face (1b) of the trim member (1) and the end of which is bent at 90° in the direction of said first rail (7a).

5. A finishing trim member (1) forming a discharge gutter according to the preceding claim **characterised in that** the edge of the trim member which extends towards the exterior of the vehicle comprises an end (1c) which is curved in parallel relationship with the side panel of the vehicle for forming a gutter for ducting the water coming from the roof.

6. A finishing trim member (1) forming a discharge gutter according to the preceding claim **characterised in that** said trim member (1) is made of extruded aluminium.

7. A finishing trim member (1) forming a discharge gutter according to the preceding claim **characterised in that** said base of the clip (6) comprises an elastic element (6c) co-operating with an opening (9) provided at the edge of at least one of the rails (7a,. 7b) to immobilise the clip (6) on said rail (7a, 7b) in respect of translatory movement.

8. A finishing trim member (1) forming a discharge gutter according to the preceding claim **characterised in that** a sealing foam (8) is interposed between the internal face of the trim member (1) and the edge (3) of the body.
